Europäisches Patentamt

European Patent Office

Office européen des brevets

(19)

(11) Numéro de publication : **0 374 032 B1**

(12) **FASCICULE DE BREVET EUROPEEN**

(45) Date de publication du fascicule du brevet :
08.04.92 Bulletin 92/15

(51) Int. Cl.⁵ : **F16B 5/10**

(21) Numéro de dépôt : **89403443.8**

(22) Date de dépôt : **12.12.89**

(54) **Dispositif et procédé d'assemblage, notamment automatiques, d'un ensemble fonctionnel ou décoratif sur une face de montage, extérieure ou avant, d'une paroi d'un élément-support.**

(30) Priorité : **14.12.88 FR 8816484**

(43) Date de publication de la demande :
**20.06.90 Bulletin 90/25**

(45) Mention de la délivrance du brevet :
**08.04.92 Bulletin 92/15**

(84) Etats contractants désignés :
**DE GB IT**

(56) Documents cités :
**FR-A- 1 330 050**
**GB-A- 576 458**
**US-A- 3 015 870**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Robert, Christian**
**"Hameau des Berges" 4, Allée des Lauriers**
**F-78510 Triel sur Seine (FR)**

(74) Mandataire : **Durand, Yves Armand Louis et al**
**CABINET WEINSTEIN 20, Avenue de**
**Friedland**
**F-75008 Paris (FR)**

EP 0 374 032 B1

## Description

L'invention concerne un dispositif et un procédé d'assemblage, notamment automatiques, d'un ensemble fonctionnel ou décoratif sur une face de montage, extérieure ou avant, d'une paroi d'un élément-support.

Elle concerne plus particulièrement un dispositif et un procédé d'assemblage automatiques d'un équipement, tel qu'un projecteur ou un tableau de bord, sur la caisse d'un véhicule automobile.

On connaît déjà un dispositif d'assemblage, d'un ensemble quelconque sur un élément-support, comprenant un organe de fixation constitué par un axe de liaison cylindrique dont l'une des extrémités, au voisinage de laquelle est ménagée une face d'appui s'étendant radialement, est solidaire dudit ensemble, l'axe de liaison étant par ailleurs apte à venir s'engager dans un orifice de montage de la paroi de l'élément-support pour venir abouter, par l'intermédiaire de sa face d'appui, contre la face de montage de la paroi précitée.

De plus, l'autre extrémité ou extrémité libre de l'axe de liaison est conformée pour recevoir une bague de blocage destinée à venir en contact, par sa face d'appui latérale, contre l'autre face, intérieure ou arrière, de l'élément-support.

De plus, l'extrémité libre de l'axe et l'alésage de la bague de blocage sont pourvus d'un mécanisme d'arrêt axial, mécaniquement verrouillable et déverrouillable, du type à baïonnette, ce mécanisme d'arrêt, après un engagement axial et un déplacement en rotation appropriés de la bague, permettant, d'une part l'arrêt en translation de la bague sur l'axe, et d'autre part le blocage de l'élément-support entre la face d'appui solidaire de l'axe de liaison et la face d'appui latérale de la bague. De même, on connaît un procédé d'assemblage mettant notamment en oeuvre le dispositif présenté ci-dessus, et dans lequel on introduit, tout d'abord, l'axe de liaison dans l'orifice de montage, puis dans lequel on engage et on verrouille, du côté de la face arrière de la paroi de l'élément-support, la bague de blocage sur l'axe de liaison.

Ce dispositif et ce procédé présentent l'inconvénient essentiel de ne pas permettre l'automatisation totale et l'assemblage robotisé de l'ensemble, fonctionnel ou décoratif, sur l'élément-support, notamment lorsque la face intérieure ou arrière de la paroi est peu ou pas accessible.

Ainsi, l'invention a pour objet de remédier à cet inconvénient en proposant un dispositif et un procédé d'assemblage automatiques permettant le montage entièrement robotisé, plus particulièrement d'un équipement sur la caisse d'un véhicule.

A cet effet, l'invention a pour objet un dispositif d'assemblage, notamment automatique, d'un ensemble fonctionnel ou décoratif sur une face de montage, extérieure ou avant, d'une paroi d'un élément-support, du type comportant au moins un organe de fixation constitué par un axe de liaison cylindrique dont l'une des extrémités, au voisinage de laquelle est ménagée une face d'appui s'étendant radialement, est solidaire dudit ensemble, l'axe de liaison étant apte à venir s'engager dans un orifice de montage de la paroi pour venir abouter, par l'intermédiaire de sa face d'appui, contre la face de montage de la paroi précitée, l'autre extrémité ou extrémité libre de l'axe de liaison étant susceptible de coopérer avec une bague de blocage destinée à venir en contact par sa face d'appui latérale contre l'autre face, intérieure ou arrière, de l'élément-support, tandis que l'extrémité libre de l'axe de liaison et l'alésage de la bague de blocage sont pourvus d'un mécanisme d'arrêt axial, mécaniquement verrouillable et déverrouillable, notamment du type à baïonnette, ledit mécanisme d'arrêt, après un engagement axial et un déplacement en rotation appropriés de la bague, permettant, d'une part l'arrêt en translation de la bague sur l'axe, et d'autre part le blocage de l'élément-support sur les deux faces d'appui précitées, caractérisé en ce qu'il comporte un moyen d'entraînement en rotation de la bague de blocage qui est actionnable du côté de la face de montage, extérieure ou avant, de ladite paroi de l'élément-support, la bague de blocage et ledit orifice de montage comportant un mécanisme d'arrêt axial supplémentaire, mécaniquement verrouillable et déverrouillable, permettant l'introduction de la bague, pré-assemblée sur l'axe de liaison, dans ledit orifice de montage du côté de ladite face de montage, extérieure ou avant, de la paroi précitée.

Suivant une autre caractéristique, le moyen d'entraînement est constitué par au moins une languette qui fait extérieurement saillie du côté dudit ensemble et qui est solidaire de la bague de blocage.

Par ailleurs, la languette d'entraînement vient de matière avec la bague de blocage, du côté de la face d'appui latérale de celle-ci, et elle fait extérieurement saillie au travers d'une lumière circulaire oblongue ménagée dans une platine qui porte ledit ensemble et auquel est fixé ledit axe de liaison.

Suivant encore une autre caractéristique, la lumière est ménagée entre le pourtour extérieur dudit axe de liaison et un épaulement qui est prévu sur la platine et qui forme, d'une part, la face d'appui coopérant avec la face de montage de la paroi, et d'autre part, une portée de centrage radial de la platine sur la paroi en s'ajustant dans ledit orifice de montage.

Le mécanisme d'arrêt supplémentaire, mécaniquement verrouillable et déverrouillable, est quant à lui, constitué par au moins un ergot qui fait radialement saillie du pourtour extérieur de la bague et qui est susceptible de venir s'engager dans une rainure longitudinale correspondante ménagée dans ladite paroi et débouchant, d'une part longitudinalement de part et d'autre de celle-ci, et d'autre part radialement dans l'orifice de montage.

On précisera aussi que l'extrémité libre de l'axe comporte au moins une protubérance déformable radialement de façon élastique et destinée à coopérer avec l'alésage de la bague de blocage pour permettre le maintien de celle-ci dans son état pré-assemblé sur l'axe de liaison.

On précisera aussi que le dispositif selon l'invention comporte un organe de manoeuvre du moyen d'entraînement ou languette de la bague de blocage, cet organe de manoeuvre, qui est ajustable coaxialement à l'axe de liaison, étant constitué par une clé tubulaire pourvue d'un évidement susceptible de recevoir axialement et d'entraîner, par un déplacement angulaire approprié, ledit moyen d'entraînement ou languette.

De plus, ledit organe de manoeuvre comporte à son extrémité libre un axe de guidage apte à venir s'ajuster dans un orifice correspondant ménagé dans la platine, du côté opposé à l'axe de liaison et de façon coaxiale à celui-ci.

On précisera encore ici, que ladite platine est pourvue du côté opposé audit axe de liaison, de plots de fixation sur lesquels vient s'emboîter de préférence un projecteur, ledit élément-support sur lequel vient se fixer la platine étant constitué par la caisse d'un véhicule automobile.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue en perspective d'un dispositif d'assemblage selon l'invention, équipant notamment un projecteur destiné à être assemblé sur la caisse, vue à une échelle beaucoup plus réduite, d'un véhicule automobile ;

La figure 2a est une vue en coupe longitudinale faite suivant la ligne II-II de la figure 1, lors de la phase de montage du dispositif selon l'invention ;

La figure 2b est une vue similaire à la figure 2a mais représentant le dispositif selon l'invention lors de la face de verrouillage ;

La figure 3a est une vue en coupe longitudinale faite suivant la ligne III-III de la figure 1 et représentant le dispositif selon l'invention lors de la phase de montage ; et

La figure 3b est une vue similaire à la figure 3 mais représentant le dispositif lors de la phase de verrouillage.

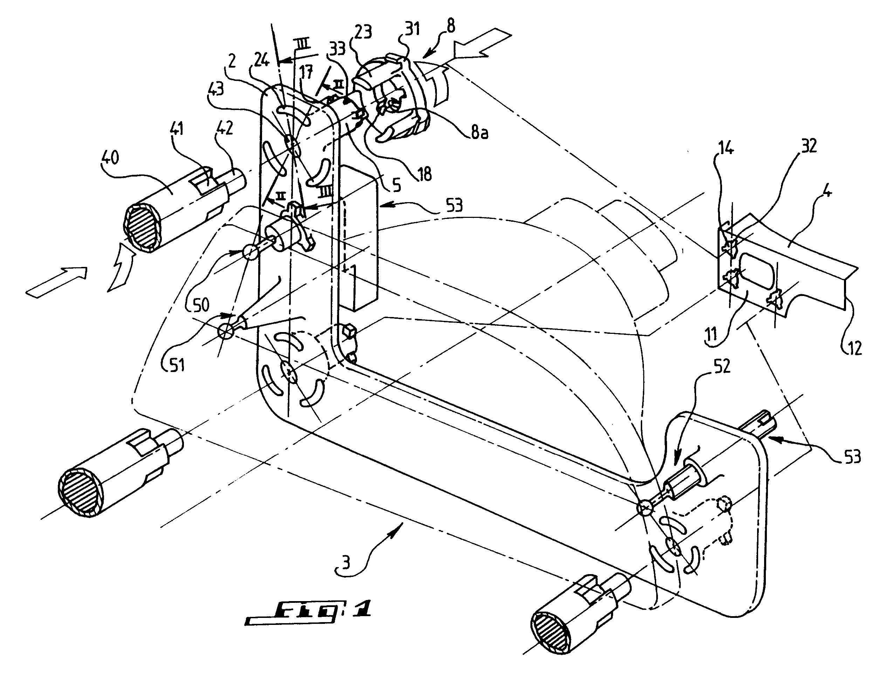

En se reportant à la figure 1, un dispositif d'assemblage selon l'invention comporte un ou plusieurs (par exemple trois) organes de fixation, solidaires d'une platine 2, par exemple sensiblement plane et en forme de L.

Un ensemble 3 a caractère fonctionnel ou décoratif, tel qu'un projecteur, un tableau de bord ou un clignotant, est fixé sur la platine 2 et est destiné à être assemblé de façon entièrement automatique, de préférence robotisée, sur un élément-support 4, tel que la caisse d'un véhicule automobile.

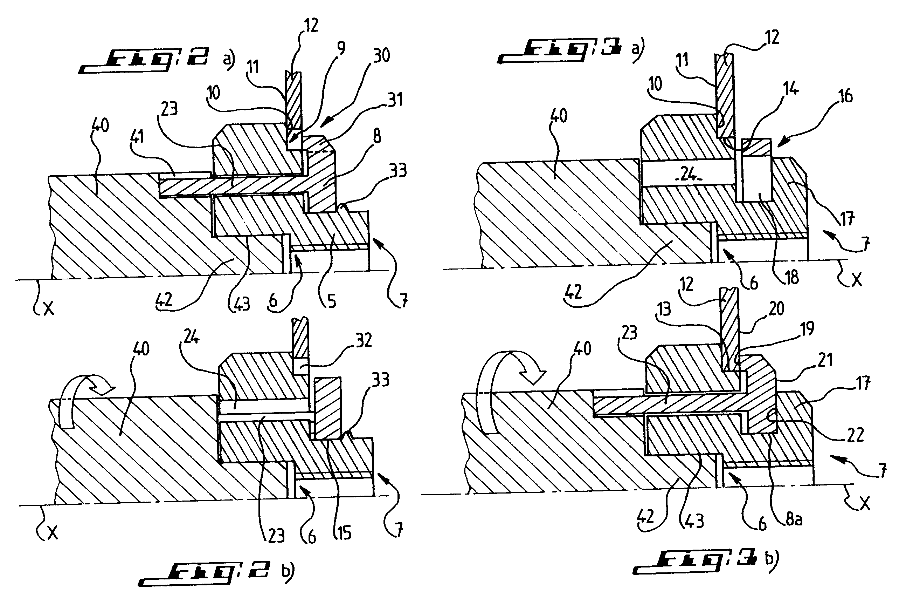

Chaque organe de fixation est constitué d'un axe de liaison cylindrique 5 dont une extrémité 6 (figure 2a,b et 3a,b), est fixée à la platine 2, ou venue de forme avec elle, tandis que l'autre extrémité 7 ou extrémité libre est susceptible de recevoir axialement une bague de blocage 8.

Par ailleurs, la platine 2 comporte un épaulement 9 formant une face d'appui 10 qui s'étend radialement à l'axe géométrique X de l'axe de liaison 5, au proche de l'extrémité 6 de celui-ci, et qui est destinée à venir s'appliquer contre une face de montage 11 extérieure ou avant d'une paroi 12 de l'élément-support 4.

D'autre part, l'épaulement 9 forme une portée cylindrique 13 permettant le centrage radial de la platine 2 par rapport à l'élément-support 4 en s'ajustant dans un orifice de montage 14 ménagé dans la paroi 12 de l'élément-support 4.

L'extrémité libre 7 de l'axe de liaison 5 et l'alésage 8a de la bague de blocage 8 sont pourvus d'un mécanisme d'arrêt axial 16 mécaniquement verrouillable et déverrouillable, du type a baïonnette, permettant après un engagement axial et un déplacement en rotation appropriés de la bague 8 par rapport à l'axe de liaison 5, l'arrêt en translation de ladite bague 8 sur l'axe de liaison 5.

Selon un mode de réalisation préféré, le mécanisme d'arrêt 16 est constitué d'un ou plusieurs (par exemple trois) ergots radialement saillants 17, prévus à l'extrémité libre 7 de l'axe 8 et susceptibles de coopérer respectivement avec une rainure longitudinale 18 qui est ménagée dans la bague 8 et qui débouche, d'une part longitudinalement de part et d'autre de celle-ci et d'autre part radialement dans l'alésage 8a.

Par ailleurs, on remarquera que la bague de blocage 8 comporte d'un côté une face d'appui latérale 19 destinée à venir en appui contre une face intérieure ou arrière 20 de la paroi 12 tandis qu'elle comporte, de l'autre côté, une face de réaction latérale 21 susceptible de venir coopérer axialement avec une face correspondante 22 du ou des ergots 17.

De plus, le dispositif selon l'invention comporte un moyen d'entraînement en rotation de la bague de blocage 8, qui est constitué par une ou plusieurs (par exemple trois) languettes longitudinales 23 faisant latéralement saillie de la bague de blocage 8 du côté de sa face d'appui latérale 19.

Les languettes d'entraînement 23, lorsque la bague de blocage 8 est engagée sur l'axe de liaison 5, font extérieurement saillie de la platine 2, du côté de l'ensemble 3 et de la face de montage extérieure ou avant 11, au travers de lumières circulaires oblongues 24 respectives ménagées dans la platine 2, entre l'épaulement 9 et le pourtour extérieur de l'axe de liaison 5.

Dès lors, on remarquera que chaque languette d'entraînement 23, qui vient de préférence de matière avec la bague de blocage 8 et qui peut se déplacer selon une trajectoire sensiblement circulaire, coaxialement à l'axe géométrique X, dans la lumière correspondante 23, est actionnable du côté de l'ensemble 3 et de la face de montage extérieure ou avant 11 de la paroi 12 de l'élément-support 4.

De plus, on observera que la bague de blocage 8 et l'orifice de montage 14 comportent un mécanisme d'arrêt axial supplémentaire 30 mécaniquement verrouillable et déverrouillable.

Le mécanisme d'arrêt supplémentaire 30 est du type à baïonnette et il est fonctionnellement et par exemple structurellement, identique au mécanisme d'arrêt 16.

Ainsi, le mécanisme d'arrêt supplémentaire 30 est constitué d'un ou plusieurs ergots (par exemple trois) radialement saillants 31, disposés sur le pourtour extérieur de la bague de blocage 8 et susceptibles de coopérer respectivement avec une rainure longitudinale correspondante 32 ménagée dans la paroi 12 de l'élément-support 4 et débouchant, d'une part longitudinalement de part et d'autre de la paroi 12 et d'autre part radialement dans l'orifice de montage 14.

Par ailleurs, on précisera que la longueur utile de chaque lumière 24 est prévue de sorte qu'elle permette un déplacement angulaire de la bague de blocage 8 assurant le verrouillage, de préférence concomitant, des deux mécanismes d'arrêt 16 et 30.

En outre, l'extrémité libre 7 de l'axe de liaison 5 comporte au moins une protubérance 33 déformable radialement de façon élastique et destinée à coopérer avec l'alésage 8a de la bague de blocage 8 pour permettre le maintien de celle-ci dans un état pré-assemblé sur l'axe de liaison 5.

De même, le dispositif selon l'invention comporte un organe de manoeuvre 40 des languettes d'entraînement 23 de la bague de blocage 8. L'organe de manoeuvre 40 est ajustable coaxialement à l'axe de liaison 5 et est constitué par une clé tubulaire pourvue d'un ou plusieurs évidements 41 susceptibles de recevoir axialement et d'entraîner, par un déplacement angulaire approprié, chaque languette d'entraînement 23.

On remarquera que l'organe de manoeuvre 40 comporte à son extrémité libre un axe de guidage 42 apte à venir s'ajuster dans un orifice correspondant 43 ménagé dans la platine 2, du côté opposé façon coaxiale à celui-ci.

Selon un mode de réalisation préféré de l'invention, l'ensemble ou projecteur 3 est fixé sur la platine 2 du côté opposé aux axes de liaison 5, par l'intermédiaire de plots de fixation 50, 51, 52 à tête sensiblement sphérique sur lesquels vient s'emboîter ledit projecteur.

Certains des plots de fixation, de préférence deux, peuvent être respectivement pourvus d'un mécanisme de réglage 53 susceptible de les déplacer axialement pour modifier le réglage azimutal ou en site du projecteur.

On remarquera que selon l'invention, ce mécanisme de réglage 53 est disposé directement sur la platine 2 et permet un réglage du projecteur après son montage définitif sur la caisse 4 du véhicule.

Le fonctionnement du dispositif selon l'invention est le suivant.

Après, par exemple assemblage du projecteur sur la platine 2, on dispose chaque bague de blocage 8 sur chaque axe de liaison correspondant 5 en engageant, d'une part les ergots 17 dans les rainures longitudinales correspondantes 18, et d'autre part les languettes d'entraînement 23 dans les lumières correspondantes 24.

Ensuite, on applique une poussée axiale supplémentaire sur la bague de blocage 8 pour faire coopérer son alésage 8a avec chaque protubérance 33 qui "s'efface" radialement vers l'intérieur de l'axe de liaison 5.

Après passage de la bague de blocage 8 sur la ou les protubérances 33, celles-ci forment derrière la bague de blocage 8 une butée axiale du type à encliquetage.

Dans cette position de montage, représentée sur les figures 2a et 3a, on ajuste chaque organe de manoeuvre 40, et plus particulièrement son axe de guidage 42, dans l'orifice correspondant 43, chaque languette d'entraînement 23 venant se loger dans un évidement 41.

Les organes de manoeuvre 40 étant disposés sur des têtes de robot, celui-ci porte désormais l'unité projecteur-platine-bague de blocage, et par l'intermédiaire de palpeurs, non représentés, il vient positionner ladite platine 2 sur la caisse 4 en engageant chaque axe de liaison 5 dans l'orifice de montage correspondant 14 pour venir faire about er chaque face d'appui 10 contre la face de montage, extérieure ou avant 11, tout en introduisant simultanément chaque ergot 31 du mécanisme d'arrêt supplémentaire 30 dans la rainure longitudinale correspondante 32 de la paroi 12 de l'élément-support ou caisse 4.

Par une légère poussée axiale sur chaque organe de manoeuvre 40 et sur l'extrémité libre de chaque languette d'entraînement 23, on assure la sortie axiale de chaque ergot 31 de sa rainure longitudinale 32.

La bague de blocage 8 étant toutefois retenue axialement par chaque protubérance 33, les évidements 18 ne peuvent se réengager sur les ergots 17 du mécanisme d'arrêt 16.

Ensuite, on fait tourner chaque organe de manoeuvre 40 d'un angle approprié, pour permettre le déplacement des languettes d'entraînement 23 dans chaque lumière 24, et le déplacement en rotation de chaque bague de blocage 8 sur l'axe de liaison 5.

Ainsi, chaque ergot 17 vient "chevaucher" la face de réaction latérale 21 de la bague de blocage 8, tandis que chaque ergot 31 vient "chevaucher" la face intérieure ou arrière de la paroi 12 de l'élément-support ou caisse 4.

Les deux mécanismes d'arrêt 16 et 30 étant verrouillés de façon simultanée et concomitante, la platine 2, et donc l'ensemble ou projecteur 3 sont maintenus fixement et sont définitivement assemblés sur l'élément-support ou caisse 4.

On comprendra donc qu'en permettant l'introduction de la bague de blocage 8, pré-assemblée sur l'axe de liaison 5, dans l'orifice de montage 14 du côté de la face de montage avant ou extérieure 11 de la paroi 12 de l'élément-support, le dispositif selon l'invention permet une mise en oeuvre totalement automatisée et robotisée puisqu'il ne nécessite aucune intervention du côté de la face intérieure ou arrière de l'élément- support, cette intervention étant extrêmement difficile, voir impossible à réaliser par la tête d'un robot, sur un véhicule de longueur réduite dont l'espace moteur est très limité.

L'invention concerne de même un procédé d'assemblage automatique de l'ensemble fonctionnel ou décoratif 3 sur la face de montage 11, extérieure ou avant, de la paroi 12 de l'élément-support, dans lequel est par exemple mis en oeuvre le dispositif selon l'invention qui vient d'être décrit.

Ce procédé consiste donc à disposer sur l'axe de liaison 5 qui est solidaire de l'ensemble 3 par l'une de ses extrémités 6, la bague de blocage 8, à maintenir au moins axialement la bague de blocage 8 sur l'axe de liaison 5, à introduire, par déplacement et guidage, le couple pré-assemblé axe de liaison 5-bague de blocage 8 dans l'orifice de montage 14 de la paroi 12 jusqu'à l'application de la face d'appui 10, radialement saillante et ménagée au voisinage de ladite extrémité 6 de l'axe de liaison 5, contre ladite face de montage 11, puis à commander, du côté de la face de montage, extérieure ou avant 11, le déplacement en rotation de la bague de blocage 8 pour permettre le verrouillage concomitant des deux mécanismes d'arrêt axial 16 et 30, du type à baïonnette, respectivement prévus entre l'axe de liaison 5 et la bague de blocage 8 et entre la bague de blocage 8 et la paroi 12 de l'élément-support 4.

De plus, et dans l'exemple de réalisation préféré de la présente invention, avant les étapes précitées, on pré-assemble et on pré-règle ledit ensemble ou projecteur 3 sur un des côtés de la platine 2, l'autre côté de celle-ci comportant le ou les axes de liaison 5, puis on fixe ladite platine 2 comme mentionné dans les étapes ci-dessus, sur la caisse 4 d'un véhicule qui forme ledit élément-support.

On précisera que les languettes d'entraînement 23 peuvent être fixées sur l'organe de manoeuvre 40 et être solidarisables de la bague de blocage 8 en venant se loger respectivement, au travers de la lumière correspondante 24, dans un évidement, non représenté, ménagé dans la bague de blocage 8.

## Revendications

1. Dispositif d'assemblage, notamment automatique, d'un ensemble, fonctionnel ou décoratif (3), sur une face de montage (11), extérieure ou avant, d'une paroi (12) d'un élément-support (4) et du type comportant au moins un organe de fixation, constitué par un axe de liaison cylindrique (5) dont l'une des extrémités (6) au voisinage de laquelle est ménagée une face d'appui (10) s'étendant radialement, est solidaire dudit ensemble (3), ledit axe de liaison (5) étant apte à venir s'engager dans un orifice de montage (14) de la paroi (12) pour venir abouter, par l'intermédiaire de sa face d'appui (10), contre la face de montage (11) de la paroi précitée (12), l'autre extrémité ou extrémité libre (7) dudit axe de liaison (5) étant susceptible de coopérer avec une bague de blocage (8) destinée à venir en contact par sa face d'appui latérale (19) contre l'autre face (20), intérieure ou arrière, de l'élément-support (4), tandis que l'extrémité libre (7) de l'axe et l'alésage (8a) de la bague de blocage (8) sont pourvus d'un mécanisme d'arrêt axial (16) mécaniquement verrouillable et déverrouillable, notamment du type à baïonnette, ledit mécanisme d'arrêt (16) après un engagement axial et un déplacement en rotation appropriés de la bague de blocage (8) permettant, d'une part l'arrêt en translation de la bague (8) sur l'axe de liaison (5), et d'autre part le blocage de l'élément-support (4) entre les deux faces d'appui précitées (10, 19), caractérisé en ce qu'il comporte un moyen d'entraînement en rotation (23) de la bague de blocage qui est actionnable du côté de la face de montage (11) extérieure ou avant de ladite paroi (12) de l'élément-support (4), la bague de blocage (8) et ledit orifice de montage (14) comportant un mécanisme d'arrêt axial supplémentaire (30), mécaniquement verrouillable et déverrouillable, permettant l'introduction de la bague de blocage (8), pré-assemblée sur l'axe de liaison (5), dans ledit orifice de montage (14), du côté de ladite face de montage (11), extérieure ou avant de la paroi précitée (12).

2. Dispositif selon la revendication 1, caractérisé en ce que ledit moyen d'entraînement est constitué par au moins une languette (23) qui fait extérieurement saillie du côté dudit ensemble (3) et qui est solidaire de la bague de blocage (8).

3. Dispositif selon la revendication 2, caractérisé en ce que ladite languette d'entraînement (23) vient de matière avec la bague de blocage (8), du côté de sa face d'appui latérale (29), et fait saillie au travers d'une lumière circulaire oblongue (24) ménagée dans une platine (2) qui porte ledit ensemble (3) et auquel est fixé ledit axe de liaison (5).

4. Dispositif selon la revendication 3, caractérisé en ce que la longueur utile de chaque lumière (24) est telle que le déplacement angulaire de la bague de blocage (8) assure le verrouillage, de préférence concomitant, des deux mécanismes d'arrêt (16) et (30).

5. Dispositif selon la revendication 4, caractérisé en ce que ladite lumière (24) est ménagée entre le pourtour extérieur dudit axe de liaison (5) et un épaulement (9) qui est prévu sur la platine (2) et qui forme, d'une part la face d'appui (10) coopérant avec la face de montage (11) de la paroi (12), et d'autre part une portée (13) de centrage radiale de la platine (2) sur la paroi (12) en s'ajustant dans ledit orifice de montage (14).

6. Dispositif selon l'une quelconque des revendications 1 à 5, caractérisé en ce que le mécanisme d'arrêt supplémentaire (30), mécaniquement verrouillable et déverrouillable, est constitué par au moins un ergot (31) qui fait radialement saillie du pourtour extérieur de la bague (8) et qui est susceptible de venir s'engager dans une rainure longitudinale correspondante (32) ménagée dans ladite paroi (12) et débouchant, d'une part longitudinalement de part et d'autre de celle-ci, et d'autre part radialement dans l'orifice de montage (14).

7. Dispositif selon l'une quelconque des revendications précédentes, caractérisé en ce que l'extrémité libre (7) de l'axe de liaison (5) comporte au moins une protubérance (33) déformable radialement de façon élastique et destinée à coopérer avec l'alésage (8a) de la bague de blocage (8) pour permettre le maintien de celle-ci dans son état pré-assemblé sur l'axe de liaison (5).

8. Dispositif selon l'une quelconque des revendications précédentes, caractérisé en ce qu'il comporte un organe de manoeuvre du moyen d'entraînement ou languette (23) de la bague de blocage (8), cet organe de manoeuvre, qui est ajustable coaxialement à l'axe de liaison (5), étant constitué par une clé tubulaire (40) pourvue d'au moins une évidement (41) susceptible de recevoir axialement et d'entraîner, par un déplacement angulaire approprié, le moyen d'entraînement ou languette (23).

9. Dispositif selon la revendication 8, caractérisé en ce que ledit organe de manoeuvre (40) comporte à son extrémité libre un axe de guidage (42) apte à venir s'ajuster dans un orifice correspondant (43) ménagé dans la platine (2), du côté opposé à ou aux axes de liaison (5) et de façon coaxiale à celui ou ceux-ci.

10. Dispositif selon l'une quelconque des revendications précédentes, caractérisé en ce que ladite platine (2) est pourvue, du côté opposé auxdits axes de liaison (5), de plots (50, 51, 52) de fixation sur lesquels vient s'emboîter un projecteur, ledit élément-support (4) sur lequel vient se fixer la platine (2) étant constitué par la caisse d'un véhicule automobile.

11. Dispositif selon la revendication 10, caractérisé en ce qu'au moins l'un des plots est pourvu d'un dispositif de réglage (53) susceptible de le déplacer axialement pour modifier le réglage du projecteur (3).

12. Procédé d'assemblage automatique d'un ensemble (3) fonctionnel ou décoratif sur une face de montage (11), extérieure ou avant d'une paroi (12) d'un élément-support (4), caractérisé en ce qu'il consiste :

a) à disposer sur un axe de liaison (5) qui est solidaire dudit ensemble (3) par l'une de ses extrémités (6), une bague de blocage (8) ;

b) à maintenir au moins axialement la bague de blocage (8) sur ledit axe de liaison (5) ;

c) à introduire, par déplacement et guidage, le couple pré-assemblé axe de liaison (5)-bague de blocage (8) dans un orifice de montage (14) de ladite paroi (12) jusqu'à l'application d'une face d'appui (10), radialement saillante et ménagée au voisinage de ladite extrémité (6) de l'axe de liaison (5), contre ladite face de montage (11) ;

d) à commander du côté de la face de montage (11), le déplacement en rotation de la bague de blocage (8) pour permettre le verrouillage concomitant de deux mécanismes d'arrêt axial (16) et (30), du type à baïonnette, respectivement prévus entre l'axe de liaison (5) et la bague de blocage (8) et entre la bague de blocage (8) et la paroi (12) de l'élément-support (4).

13. Procédé selon la revendication 12, caractérisé en ce qu'avant les étapes précitées (a, b, c, d) on assemble ledit ensemble (3), tel qu'un projecteur, sur un des côtés d'une platine (2), l'autre côté de celle-ci comportant un ou plusieurs axes de liaison (5), puis en ce qu'on fixe ladite platine (2) comme mentionné dans les étapes (a, b, c, d) sur la caisse d'un véhicule, formant ledit élément-support (4).

**Patentansprüche**

1. Vorrichtung zum insbesondere selbsttätigen Anbringen einer Funktions-bzw. Ziereinheit (3) an einer äusseren bzw. vorderen Anbaufläche (11) einer Wandung (12) eines Tragelementes (4) und derjenigen Gattung mit wenigstens einem durch einen zylindrischen Verbindungstift (5) gebildeten Befestigungsglied dessen eine Ende (6), in dessen Bereich sich eine Anlagefläche (10) radial erstreckt, mit der besagten Einheit (3) fest verbunden ist, wobei der besagte Verbindungstift (5) geeignet ist, sich in eine Montageöffnung (14) der Wandung (12) einzufügen, um über seine Anlagefläche (10) an dip Montagefläche (11) der vorgennanten Wandung (12) anzustossen, wobei das andere bzw. freie Ende (7) des besagten Verbindungstifts (5) fähig ist, mit einem Hemmungsring (8), der bestimmt ist, mit seiner seitlichen Anlagefläche (19) mit der anderen inneren bzw. hinteren Fläche (20) des Tragelementes (4) in Berührung zu kommen zusammenzuwirken, während das freie Ende (7) des Stiftes und die Bohrung (8a) des Hemmungsrings (8) mit einem mechanisch verriegelbaren bzw. entriegelbaren insbesondere bayonetartigen axialen Feststellmechanismus (16) versehen sind, wobei der besagte Feststellmechanismus (16) nach einem geeigneten axialen Eingriff und einer geeigneten Drehbewegung des Hemmungsrings (8) einerseits die Sperrung der Verschiebung des Ringes (8) auf dem Verbindungstift (5) und andererseits das Feststellen des Tragelementes (4) zwischen den beiden vorgennanten Anlageflächen (10,19) gestattet, dadurch gekennzeichnet, das sie ein Mittel (23) zum Drehantrieb des Hemmungsringes aufweist, welches zur äusseren bzw. vorderen Montagefläche (11) hin der besagten Wandung (12) des Tragelementes (4) betätigbar ist, wobei der Hemmungsring (8) und die besagte Montageöffnung (14) einen zusätzlichen mechanisch verriegplbaren bzw. entriegelbaren axialen Feststellmechanismus (30) aufweist, der das Einfügen des vorher auf den Verbindungstift (5) aufgesetzten Hemmungsringes (8) in die besagte Montageöffnung (14) für den besagten äusseren bzw. vorderen Montagefläche (11) hin der vorgennanten Wandung (12) ermöglicht.

2. Vorrichtung gemäss Anspruch 1, dadurch gekennzeichnet, dass das besagte Antriebsmittel durch wenigstens eine Zunge (23) gebildet wird, dip nach aussen zu der besagten Einheit (3) hin vorsteht und die mit dem Hemmungsring (8) fest verbunden ist.

3. Vorrichtung nach Anspruch 2, dadurch gekennzeichnet, dass dip besagte Antriebszunge (23) werkstoffmässig einstückig mit dem Hemmungsring (8) zu seiner seitlichen Anlagefläche (29) hin ausgebildet ist und durch pin in einer Platte (2) gebildetes kreisbogenförmiges Langloch (24) hindurchragt, welche die besagte Einheit (3) trägt und an welcher der besagte Verbindungstift (5) befestigt ist.

4. Vorrichtung nach Anspruch 3, dadurch gekennzeichnet, dass die nützliche Länge jedes Langloches (24) derart ist, dass dip Winkelbewegung des Hemmungsringes (8) dip vorzugsweise gleichzeitige Verriegelung der beiden Freststellmechanismen (16) und (30) gewährleistet.

5. Vorrichtung nach Anspruch 4, dadurch gekennzeichnet, dass das besagte Langlorh (24) zwischen dem äusseren Umfang des besagten Verbindungstiftes (5) und einer Schulter (9) angeordnet ist, welche an der Platte (2) vorgesehen ist und dip einerseits die mit der Anbaufläche (11) der Wandung (12) zusammenwirkende Anbaufläche (10) und andererseits einen radialen Zentrierbereich (13) der Platte (2) an der Wandung (12) unter genaues Einfügen in dip besagte Montageöffnung (14) bildet.

6. Vorrichtung nach irgendeinem der Ansprüche 1 bis 5, dadurch gekennzeichnet dass der mechanisch verriegelbare bzw. entriegelbare zusätzliche Feststellmechanismus (30) durch wenigstens einen Nocken (31) gebildet wird, der von dem äusseren Umfang des Ringes (8) radial absteht und der fähig ist, in eine in der besagten Wandung (12) gebildete entsprechende Längsnut (32) einzugreifen, welche Nut einerseits in Längsrichtung beiderseits der Wandung und andererseits radial in die Montageöffnung (14) mündet.

7. Vorrichtung nach irgendeinem der vorangehe-.nden Ansprüche, dadurch gekennzeichnet, dass das freie Ende (7) des Verbindungstiftes (5) wenigstens einen in elastischer Weise radial verformbaren Vorsprung (33) aufweist, der bestimmt ist, mit der Bohrung (8a) des Hemmungsrings (8) zusammenzuwirken, um diesen in spinen im voraus mit dem Verbindungstift (5) zusammengefügten Zustand aufrechtzuerhalten.

8. Vorrichtung nach irgendeinem der vorangehenden Ansprüche, dadurch gekennzeichnet, dass sie ein Glied zur Betätigung des Antriebsmittels bzw. der Zunge (23) des Hemmungsrings (8) aufweist, wobei dieses Betätigungsglied, dass genau koaxial. zum Verbindungstift (5) aufsteckbar ist, durch einen rohrförmigen Schlüssel. (40) gebildet wird, welcher mit wenigstens einer zur axialen Aufnahme und zum Antrieb des Anstriebsmittels bzw. der Zunge (23) durch eine geeignete Winkelbewegung, fähige Aussparung (41) versehen ist.

9. Vorrichtung nach Anspruch 8, dadurch gekennzeichnet, dass das besagte Betätigungsglied (40) an seinem freien Ende einen Führungszapfen (42) aufweist, der fähig ist, sich in eine in der Platte (2) zum Verbindungstift bzw. zu den Verbindungstiften (5) hin gebildete entsprechende Oeffnung (43) genau und koaxial zu diesem bzw. diesen einzufügen.

10. Vorrichtung nach irgendeinem der vorangehenden Ansprüche, dadurch gekennzeichnet, dass die besagte Platte (2) auf der den besagten Verbindungstiften (5) entgegensetzten Seite mit Befestigungsansätzen (50, 51,52), auf welche ein Scheinwerfer aufgesetzt wird, versehen ist, wobei das besagte Tragelement (4), an welchem dip Platte (2) befestigt wird, durch dem Kasten eines Kraftfahrzeugs gebildet ist.

11. Vorrichtung nach Anspruch 10, dadurch gekennzeichnet, dass wenigstens einer der Ansätze mit einer Stellvorrichtung (53) versehen ist, die fähig ist, ihn axial zu versrhieben, um die Einstellung des Scheinwerfers (3) zu verändern.

12. Verfahren zum selbsttätigen Anbringen einer Funktions-bzw. Ziereinheit (3) an einer äusseren bzw. vorderen Anbaufläche (11) einer Wandung (12) eines Tragelementes (4), dadurch gekennzeichnet, dass es darin besteht:

a) auf einen Verbindungstift (5), der mit der besagten Einheit (3) durch eines seiner Enden (6) fest verbunden ist, einen Hemmungsring (8) aufzusetzen;

b) den Hemmungsring (8) auf dem besagten Verbindungstift (5) wenigstens axial zu halten;

c) das aus dem Verbindungstift (5) und dem Hemmungsring (8) bestehende im voraus zusammengefügte Paar durch Verschiebung und Führung in eine Montageöffnung (14) der besagten Wandung (12) einzufügen bis zur Anlage einer radial vorstehenden und im Bereich des besagten Endes (6) des Verbindungstiftes (5) ausgebildeten Anlagefläche (10) an die Anbaufläche (11);

d) zur Anbaufläche (11) hin, dip Drehbewegung des Hemmungsrings (8) zu betätigen, um das gleichzeitige Verriegeln der jeweils zwischen dem Verbindungstift (5) und dem Hemmungsring (8) und zwischen dem Hemmungsring (8) und der Wandung (12) des Tragelementes (4) vorgesehenen beiden bayonetartigen axialen Feststellmechanismen (16) und (30) zu gestatten.

13. Verfahren nach Anspruch 12, dadurch gekennzeichnet, dass vor den vorgennanten Vorgängen (a,b,c,d) man die besagte Einheit (3), wie ein Scheinwerfer, an der einen Seite einer Platte anbringt, wobei die andere Seite derselben einen bzw. mehrere Verbindungstift(e) (5) aufweist und dass man dann die besagte Platte (2) wie in den Vorgängen (a,b,c,d) erwähnt an dem das besagte Tragelement (4) bildenden Kasten eines Fahrzeugs befestigt.

## Claims

1. Device for the in particular automatic assembly of a functional or decorative whole (3) onto an external or front mounting face (11) of a wall (12) of a support element (4) and of the type comprising at least one fastening member constituted by one cylindrical connecting axis (5) one (6) of the ends of which in the vicinity of which is formed a radially extending bearing face (10) is solid with the said whole (3), the said connecting axis (5) being apt to be inserted into a mounting opening (14) of the wall (12) to come in abutment through the medium of its bearing face (10) against the mounting face (11) of the aforesaid wall (12), the other end or free end (7) of the said connecting axis (5) being susceptible of co-operating with a locking ring (8) intended to come into contact with its lateral bearing face (19) against the other internal or rear face (20) of the support element (4) whereas the free end (7) of the axis and the bore (8a) of the locking ring (8) are provided with a mechanically lockable and unlockable axial stop mechanism (16) in particular of the bayonet type, the said stop mechanism (16) after a suitable axial engagement and rotational. displacement of the looking ring (8) allowing on the ore hand the stopping in translatory motion of the ring (8) on the connecting axis (5) and on the other hand the locking of the support element (4) between both aforesaid bearing faces (10,19), characterized in that it comprises a drive means (23) for rotating the locking ring which is operable towards the outside or front mounting face (11) of the said wall (12) of the support element (4), the locking ring (8) and the said mounting opening (14) comprising a mechanically lockable and unlockable additional axial stop mechanism (30) allowing the insertion of the locking ring (8), preassembled on the connecting axis (8) into the said mounting opening (14) towards the said external or front mounting face (11) of the aforesaid wall (12).

2. Device acording to claim 1, characterized in that the said drive means is constituted by at least one tongue (23) which projects outwards on the side of the said whole (3) and which is solid with the locking ring (8).

3. Device according to claim 2, characterized in that the said drive tongue (23) is made integral in one piece of material with the locking ring (8) towards its side bearing face (29) and projects through a circular oblong opening (24) formed in a plate (2) which carries the said whole (3) and to which the said connecting axis (5) is fastened.

4. Device according to claim 3, characterized in that the useful length of each opening (24) is such that the angular displacement of the locking ring (8) ensures the preferably concomitant locking of both stop mechanisms (16) and (30).

5. Device according to claim 4, characterized in that the said opening (24) is formed between the outer periphery of the said connecting axis (5) and a shoulder (9) which is provided on the plate (2) and which forms on the one hand the bearing face (10) co-operating with the mounting face (11) of the wall (12) and on the other hand a radial centering bearing portion (13) of the plate (2) on the wall (12) while fitting into the said mounting opening (14).

6. Device according to any one of claims 1 to 5, characterized in that the mechanically lockable and unlockable additional stop mechanism is constituted by at least one snug (31) which projects radially from the outer periphery of the ring (8) and which is susceptible of coming in engagement with a corresponding longitudinal groove (32) formed in the said wall (12) and opening on the one hand longitudinally on either side of the latter and on the other hand radially into the mounting opening (14).

7. Device according to any one of the foregoing claims, characterized in that the free end (7) of the connecting axis (5) comprises at least one protrusion (33) radially deformable in an elastic manner and intended to co-operate with the bore (8a) of the locking ring (8) to allow the maintaining of the latter in its pre-assembled state on the connecting axis (5).

8. Device according to any one of the preceding claims, characterized in that it comprises a member for operating the drive means or tongue (23) of the locking ring (8), this operating member which is adjustable coaxially with the connecting axis (5) being constituted by a tubular key (40) provided with at least one recess (41) susceptible of axially receiving and driving through a suitable angular displacement the drive means or tongue (23).

9. Device according to claim 8, characterized in that the said operating member (40) comprises at its free end a guide axis (42) apt to be ajusted into a corresponding orifice (43) formed in the plate (2) on the side opposite to the connecting axis or axes (5) in coaxial relationship with the latter.

10. Device according to any one of the foregoing claims, characterized in that the said plate (2) is provided on the side opposite to said connecting axis (5) with fastening studs (50,51,52) onto which a projector is to be fitted, the said support element (4) onto which the plate (2) is to be fastened being constituted by the body of an automotive vehicle.

11. Device according to claim 10, characterized in that at least one of the studs is provided with an adusting device (23) susceptible of displacing it axially to modify the adjustement of the headlight (3).

12. Method of automatically assembling a functional or decorative unit (3) onto an outside or front mounting face (11) of a wall (12) of a support element (4), characterized in that it consists:

    a) in arranging a locking ring (8) onto a connecting axis (5) which is solid with the said unit (3) by one (6) of its ends;

    b) in at least axially holding the locking ring (8) on the said connecting axis (5);

    c) in inserting through displacement and guiding the preassembled pair of connecting axis (5) and locking ring (8) into a mounting orifice (14) of the said wall (12) until the applying of a bearing face (10) projecting radially and formed in the vicinity of the said end (6) of the connecting axis (5) against the said mounting face (11);

    d) in operating on the side of the mounting face (11) the rotational displacement of the locking ring (8) to allow the concomitant locking of both bayonet-type axial stop mechanisms (16) and (30) provided between the connecting axis (5) and the locking ring (8) and between the locking ring (8) and the wall (12) of the support element (4), respectively.

13. Method according to claim 12, characterized in that prior to the aforesaid steps (a,b,c,d) one assembles the said unit (3) such as a headlight onto one of the sides of a plate (2), the other side of the latter comprising one or several connecting axes (5) and then in that one fastens the said plate (2) as mentioned in the steps (a,b,c,d) onto the body of a vehicule forming the said support element (4).

FIG.1

_Fig._ 2 a)

_Fig._ 2 b)

_Fig._ 3 a)

_Fig._ 3 b)

EP 0 374 032 B1